# EUROPÄISCHE PATENTSCHRIFT

(11) **EP 3 851 172 B1**
(45) Veröffentlichungstag und Bekanntmachung des Hinweises auf die Patenterteilung: **21.08.2024**
(21) Anmeldenummer: 20216851.4
(22) Anmeldetag: 23.12.2020
(51) Int. Cl.: A63C 5/12

(54) **KUNSTSTOFFMISCHUNG FÜR OBERFLÄCHENSCHUTZFOLIE**
PLASTIC COMPOUND FOR SURFACE PROTECTIONFILM
MÉLANGE DE MATIÈRE PLASTIQUE POUR FILM DE PROTECTION DE SURFACE

(30) Priorität: 15.01.2020 AT 500262020
(43) Veröffentlichungstag der Anmeldung: 21.07.2021
(73) Patentinhaber: Isosport Verbundbauteile Gesellschaft m.b.H., 7000 Eisenstadt (AT)
(72) Erfinder: GORNIK, Christian, 2491 Neufeld (AT)
(74) Vertreter: Torggler & Hofmann Patentanwälte - Innsbruck

(56) Entgegenhaltungen:
- EP-A1- 0 606 556
- EP-B1- 3 238 793
- AT-A1- 519 950
- AT-B1- 519 950

## Beschreibung

Die vorliegende Erfindung betrifft eine Kunststoffmischung mit den Merkmalen des Oberbegriffs des Anspruchs 1 und eine Oberflächenfolie für ein Sportgerät, insbesondere Schi, Snowboard oder Wassersportgerät.

Gattungsgemäße Sportgeräte werden im Bereich der Oberfläche hohen Beanspruchungen ausgesetzt. Solche Sportgeräte weisen eine Oberflächenfolie, einen Grundkörper und einer Unterseite auf.

Aus dem Stand der Technik bekannte Polymerzusammensetzungen, die teilweise für Oberflächenfolien bestimmt sind, gehen beispielsweise aus der EP 3 238 793 B1, der JP 02-305855 A oder der EP 0 606 556 A1 hervor.

Für optimale Gestaltungsmöglichkeiten ist die Oberflächenfolie transparent und wird von hinten, also auf der sogenannten Bottom-Seite, dekoriert. Die sogenannte Top-Seite der Oberflächenfolie soll eine hohe Kratzbeständigkeit aufweisen. Des Weiteren werden hohe Anforderungen hinsichtlich der Verarbeitungstemperaturen und der Gebrauchstemperaturen gestellt. Die Dekoration des Schioberflächenmaterials erfolgt beispielsweise mittels Siebdruckes, wobei bei dieser Dekoration die Lösemittelbeständigkeit der Folie sowie die Temperaturbeständigkeit im Trocknungsprozess von Bedeutung sind. Weiters besteht auch die Möglichkeit die Folien mittels Digitaldirektdruck zu dekorieren, wobei hier Systeme auf lösemittelhaltigen Tinten, wasserbasierenden Tinten, Latex-Tinten und UV-härtenden Tinten zum Einsatz kommen können. Die Dekoration derartiger Folien ist auch mittels dem Thermodiffusionsverfahren möglich. Dabei wird ein spezielles Papier mit Sublimationstinten bedruckt, welches dann in einem weiteren Prozessschritt in einer Flach- oder Rollenpresse mit der Oberflächenfolie unter Druck und Temperatur in Kontakt kommt. Bei Temperaturen ab ca. 150°C sublimieren diese Tinten und diffundieren in die Oberflächenfolie ein. Die Eindringtiefe liegt dabei bei rund 100 µm.

Bei der Verarbeitung in der Schipresse muss das Schioberflächenmaterial Temperaturbelastungen im Bereich zwischen 60°C und 150°C, je nach Herstellungsverfahren, und Pressdrücken von einigen bar standhalten, ohne dass das Material in größerem Ausmaß zu fließen beginnt. Eine hohe Haftung zwischen der Folie, den Druckfarben und dem eingesetzten Klebesystem ist Voraussetzung für die Eignung des Folienmaterials für den Schiherstellungsprozess. Im Gebrauch, also auf der Schipiste, ist die Oberflächenfolie Temperaturen bis -30°C, in Ausnahmefällen auch darunter, sowie einer hohen UV-Belastung ausgesetzt. Darüber hinaus treten auch große mechanische Beanspruchungen durch die Durchbiegung des Sportgerätes auf. Die Oberflächenfolie muss diese Belastungen ohne Versprödung und ohne Bruch überstehen.

Für alle oben genannten Dekorationsverfahren kommen heute transparente Folien auf Basis von relativ teurem Polyamid 11 oder Polyamid 12 als Oberflächenfolien zum Einsatz. Bei geringeren Ansprüchen hinsichtlich Verschleißbeständigkeit sind Folien aus kostengünstigeren MABS/TPU-Blends (Methylmethacrylat Acrylonitril Butadien Styrol/thermoplastisches Polyurethan) bekanntermaßen in Verwendung, wobei diese aufgrund der geringeren Temperaturbeständigkeit nicht für Thermodiffusionsdekoration geeignet sind und auch die Pressentemperaturen etwa 100°C nicht überschreiten dürfen, da ansonsten das Material zu fließen beginnt und aus der Form läuft. Das Mischungsverhältnis von MABS zu TPU liegt dabei typischerweise zwischen 30:70 und 70:30. Das dabei verwendete MABS ist ein transparentes Blend, welches fein verteilte Kautschukpartikel enthält. Ein weiteres Problem mit MABS/TPU Blendmaterialien für Schioberflächen ist das Auftreten von sogenanntem Weißbruch bei Umformung der Folie. Dieses Phänomen tritt aufgrund des MABS-Anteils in diesen Folien auf und ist dem Fachmann bekannt.

Besonders bei Schioberflächen, welche bis zur Stahlkante des Schis verlaufen, ist der Weißbruch in den engen Umformungsradien an den Kanten eine optische Beeinträchtigung, so dass MABS/TPU Oberflächenfolien für viele dieser Anwendungen ausscheiden.

Stand der Technik sind weiters 2-schichtige Folien, bei denen die Oberseite aus reinem TPU (thermoplastisches Polyurethan) und die Unterseite aus einem MABS/TPU-Blend bestehen, wobei die Oberseite aufgrund des TPUs sehr verschleißbeständig ist und die Unterseite aufgrund des MABS/TPU-Blends eine gute Haftung zu Siebdruck- und Digitaldruckfarben aufweist. Auch bei derartigen TPU-MABS/TPU-Coexfolien tritt Weißbruch auf, wenn auch in geringerem Ausmaß als bei MABS/TPU Monofolien. Es hat sich gezeigt, dass Folien aus reinem TPU eine zu geringe Haftung zu den in den Schi- und Snowboard industrie verwendeten Dekorationsfarben aufweisen.

In vielen Fällen wird die dekorierte Oberflächenfolie mit einem Prepreg oder einem harzgetränkten Gewebe, welches am Sportgerät dann die notwendige Steifigkeit bringt, verpresst. Dabei kommt es dann zum sogenannten Telegrafieeffekt, das bedeutet das Durchdrücken der Prepreg- oder Gewebestruktur durch die Oberflächenfolie. An der vor dem Verpressen glatten Oberfläche zeichnet sich nach dem Verpressen eine unruhige Oberflächenstruktur ab, welche sowohl optisch sichtbar als auch spürbar ist. Gewünscht ist aber eine möglichst glatte, glänzende Oberfläche auch nach dem Verpressen zu erhalten. Dies gelingt bisher nur durch Überlackieren mit einem transparenten Klarlack, was zusätzliche Kosten bei der Herstellung des Sportgerätes bewirkt.

Aufgabe der vorliegenden Erfindung ist es daher, eine Kunststoffmischung mit hoher Verschleißbeständigkeit und/oder guter Haftung bereitzustellen sowie eine entsprechende Oberflächenfolie bereitzustellen.

Hinsichtlich der Kunststoffmischung wird diese mit den Merkmalen des Anspruchs 1 gelöst.

Dies geschieht, indem der Haftvermittler ein Copolymer mit Monomereinheiten beinhaltet, welche Monomereinheiten eine funktionelle Gruppe aufweisen, die aus zumindest einem der folgenden ausgewählt ist: einer Maleimidgruppe, einer Epoxygruppe oder einer Oxazolingruppe.

Schutz begehrt wird außerdem für eine Oberflächenfolie mit zumindest einer Schicht, die eine erfindungsgemäße Kunststoffmischung aufweist, sowie ein Sportgerät mit einer erfindungsgemäßen Oberflächenfolie.

Es hat sich gezeigt, dass ein Kunststoffblend aus einem thermoplastischen Polyurethan und einem Haftvermittler die hohen Anforderungen für den Einsatz als Oberflächenfolie erfüllt. Gegebenenfalls kann das Kunststoffblend (d.h. die Kunststoffmischung) noch weitere Komponenten enthalten.

Die Herausforderung bei der Auswahl der Grundkomponenten eines transparenten Kunststoffblends (d.h. der Kunststoffmischung) besteht darin, Komponenten zu finden, die nach dem Mischvorgang und nach der Extrusion eine transparente Folie ergeben. Auch wenn die Grundkomponenten des Blends für sich transparent sind, sich aber in ihren Brechungsindizes unterscheiden, ist es nicht mehr möglich ein transparentes Blend zu erhalten.

Bei thermoplastischem Polyurethan (TPU) hat sich gezeigt, dass die Transparenz eines Blends aus den in den Ansprüchen genannten Komponenten in annähernd jedem Mischungsverhältnis erhalten bleibt.

Der Mischvorgang und die Extrusion können bevorzugt entweder auf Doppelschneckenextrudern oder auf Einschneckenextrudern erfolgen.

Die erfindungsgemäße Oberflächenfolie kann insbesondere für einen Schi, ein Snowboard oder ein Wassersportgerät verwendet werden.

Vorteilhafte Weiterbildungen der Erfindung sind in den abhängigen Ansprüchen definiert.

In bevorzugten Ausführungsformen ist der Haftvermittler ein Copolymer aus Styrol und N-Phenylmaleimid, ein Copolymer aus Styrol und 2-Isopropenyl-2-Oxazoline, ein Copolymer aus Styrol-Acrylnitril und N-Phenylmaleimid oder ein Copolymer aus Styrol und Glycidylmethacrylat.

Weiters sind auch Terpolymere aus Styrol, Maleinsäureanhydrid und N-Phenylmaleimid oder aus Methylmethacrylat, Styrol und N-Phenylmaleimid möglich.

Der Ausdruck "Copolymer" wird in der Fachsprache sowohl spezifisch für Copolymere mit genau zwei Monomereinheiten als auch allgemein für Copolymere mit undefinierter Anzahl von Monomereinheiten verwendet. Für die vorliegende Erfindung wird der Ausdruck in der allgemeineren Bedeutung verwendet, d.h. die Anzahl der verschiedenen Monomereinheiten ist - soweit nicht explizit anders erwähnt - unbestimmt.

Das thermoplastische Polyurethan kann ein aromatisches Polyurethan sein und eine Härte von über 50 ShoreD aufweisen.

Die erfindungsgemäßen Polymere enthalten keine Kautschukpartikel und sind bevorzugt auch keine Polymerblends aus mehreren Komponenten. Des Weiteren können durch das Mischungsverhältnis die Eigenschaften des Blends in einem weiten Bereich eingestellt werden.

Durch Zugabe von UV-, Verarbeitungs- und Wärmestabilisatoren kann die Mischung den jeweiligen Erfordernissen hinsichtlich Verarbeitungs- und Witterungsbeständigkeit angepasst werden.

Es können beispielsweise UV-Absorber/Stabilisatoren aus der Gruppe der Benzophenone, der Benzotriazole oder der Triazine zur Verwendung kommen. Diese können vorzugsweise mit UV-Stabilisatoren auf Basis von sogenannten HALS (hindered amine light stabilizer) kombiniert werden.

Eine Verbesserung der Temperaturbeständigkeit ist durch Zugabe von TPU-Additiven mit bi- oder tri-funktionellen Isocyanaten möglich.

Die Kratzbeständigkeit kann durch Zugabe von harten Füllstoffen verbessert werden.

Die Oberflächenfolie kann aus einer oberen Schicht aus thermoplastischem Polyurethan und einer unteren Schicht bestehend aus der erfindungsgemäßen Mischung nach einem der Ansprüche 1 bis 4 bestehen.

Die obere Schicht kann witterungsstabilisierende Additive aufweisen.

Als witterungsstabilisierende Additive können beispielsweise zuvor genannte UV-Absorber eingesetzt werden.

Zweischichtige Folien, die mittels Coextrusion hergestellt werden, können auf die jeweiligen Anforderungen in der Anwendung eingestellt werden, indem eine äußere Schicht hinsichtlich Kratz- und Witterungsbeständigkeit optimiert wird, während die innere Schicht Additive enthält, die die Verklebbarkeit verbessern.

Das Mischungsverhältnis aus TPU und dem Haftvermittler kann zwischen 50:50 und 99,9:0,1 und bevorzugt zwischen 95:5 und 99,5:0,5 liegen.

Die erfindungsgemäße Oberflächenfolie kann Dicken im Bereich zwischen 0,1 mm und 0,8 mm aufweisen.

Haftvermittler können beispielsweise einzeln oder in Kombination mit den in der AT 519950 B1 offenbarten Styrolpolymeren Polystyrol (PS), Styrol-Acrylnitril (SAN) und/oder Styrol-Blockcopolymer (SBC) kombiniert werden.

Vorzugsweise kann vorgesehen sein, dass ein Verhältnis der Schichtdicken von oberer Schicht (4) zu unterer Schicht (5) zwischen 10:90 und 90:10, vorzugsweise zwischen 20:80 und 80:20 liegt.

Die Figuren zeigen:
- Fig. 1: ein erfindungsgemäßes Sportgerät in Schnittdarstellung und
- Fig. 2: den Schichtaufbau einer erfindungsgemäßen Oberflächenfolie.

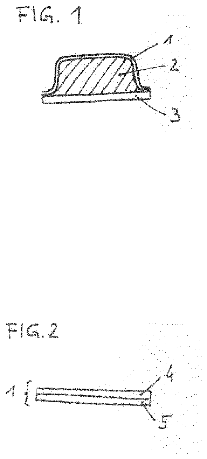

Figur 1 zeigt einen Querschnitt eines Sportgeräts (in diesem Beispiel ein Schi), welches in vereinfachter Form aus einer erfindungsgemäßen Oberflächenfolie 1, einem Grundkörper 2 und einer Unterseite 3 besteht.

Figur 2 zeigt den Schichtaufbau der Oberflächenfolie 1 des Sportgeräts, welcher in diesem Ausführungsbeispiel 2-schichtig ist.

Die obere Schicht 4, welche auch im Sportgerät außen liegt, besteht in diesem Ausführungsbeispiel aus reinem thermoplastischem Polyurethan.

Die untere Schicht 5 besteht aus einer Mischung, wie sie in einem der folgenden Beispiele beschrieben ist.

### Beispiel 1:

Ein TPU der Fa. BASF mit einer Härte von 73 ShoreD (Elastollan C74D) wird mit einem Copolymer aus Styrol und Glycidylmethacrylat der Fa. Polyscope (Xibond 920) im Verhältnis 95:5 gemischt und auf einem Einschneckenextruder zu einer Folie extrudiert. Die Transparenz der Folie mit einer Dicke von 0,5 mm aus 100% TPU beträgt 81%, die Transparenz der Folie aus der Mischung TPU mit dem Copolymer beträgt ebenfalls 81%. Die Haftung der Siebdruckfarbe auf der Folie bestehend aus dem Blend kann gegenüber der reinen TPU Folie mehr als verdoppelt werden.

### Beispiel 2:

Ein TPU der Fa. Lubrizol (Estane ETE75DT3) mit einer Härte von 75 ShoreD wird mit einem Copolymer aus Polystyrol und N-Phenylmaleimid im Verhältnis von 95:5 gemischt und auf einem Einschneckenextruder zu einer 0,5 mm dicken Folie extrudiert. Die Transparenz dieser Folie beträgt 81% und ist damit unverändert gegenüber der Folie aus reinem TPU. Auch in dieser Mischung wird die Haftung der Siebdruckfarbe gegenüber der reinen TPU Folie mehr als verdoppelt.

Die genannten Haftvermittler können einzeln oder in Mischung auch in den bekannten MABS/TPU Oberflächenfolien verwendet werden, zeigen darin aber keine relevante Eigenschaftsverbesserung im Vergleich zu den bekannten MABS/TPU Mischungen mit einem Styrol-Maleinsäureanhydrid Copolymer.

### Beispiel 3:

Eine zweischichtige Folie, die in der oberen Schicht ein UV-stabilisiertes TPU der Fa. BASF Elastogran (Elastollan 1174D) enthält und in der unteren Schicht eine Mischung aus diesem TPU mit 5% eines Copolymers aus Styrol und Glycidylmethacrylat der Fa. Polyscope (Xibond 920) enthält, wobei die obere Schicht 350 µm und die innere Schicht 200 µm dick ist, weist eine Transparenz von über 80% auf.

Die Haftung mit lösemittelbasierender Siebdruckfarbe konnte auf der unteren Schicht gegenüber reinem TPU mehr als verdoppelt werden. Die obere Schicht weist eine Kratzbeständigkeit von >8 N gemessen mit dem DUR-O-Tester der Fa. Byk-Instruments.

## Patentansprüche

1. Kunststoffmischung, umfassend ein thermoplastisches Polyurethan und einen Haftvermittler, **dadurch gekennzeichnet, dass** der Haftvermittler ein Copolymer mit Monomereinheiten beinhaltet, welche Monomereinheiten eine funktionelle Gruppe aufweisen, die aus zumindest einem der folgenden ausgewählt ist: einer Maleimidgruppe, einer Epoxygruppe oder einer Oxazolingruppe.

2. Kunststoffmischung nach Anspruch 1, **dadurch gekennzeichnet, dass** der Haftvermittler ein Copolymer aus Styrol und N-Phenylmaleimid, ein Copolymer aus Styrol und 2-Isopropenyl-2-Oxazoline, ein Copolymer aus Styrol-Acrylnitril und N-Phenylmaleimid und/oder ein Copolymer aus Styrol und Glycidylmethacrylat beinhaltet.

3. Kunststoffmischung nach Anspruch 2, **dadurch gekennzeichnet, dass** der Haftvermittler ein Terpolymer aus Methylmethacrylat, Styrol und N-Phenylmaleimid und/oder ein Terpolymer aus Styrol, Maleinsäureanhydrid und N-Phenylmaleimid beinhaltet.

4. Kunststoffmischung nach einem der Ansprüche 1 bis 3, **dadurch gekennzeichnet, dass** das Mischungsverhältnis aus TPU und dem Haftvermittler zwischen 50:50 und 99,9:0,1 und bevorzugt zwischen 95:5 und 99,5:0,5 liegt.

5. Oberflächenfolie für ein Sportgerät, **dadurch gekennzeichnet, dass** zumindest eine Schicht der Oberflächenfolie eine Kunststoffmischung nach einem der Ansprüche 1 bis 4 beinhaltet oder daraus besteht.

6. Oberflächenfolie nach Anspruch 5, **dadurch gekennzeichnet, dass** das thermoplastische Polyurethan ein aromatisches Polyurethan mit einer Härte von über 50 ShoreD ist.

7. Oberflächenfolie nach einem der Ansprüche 5 oder 6, **dadurch gekennzeichnet, dass** die Oberflächenfolie (1) aus einer oberen Schicht (4) aus thermoplastischem Polyurethan und einer unteren Schicht (5) bestehend aus der Mischung nach einem der Ansprüche 1 bis 4 besteht.

8. Oberflächenfolie nach Anspruch 7, wobei ein Verhältnis der Schichtdicken von oberer Schicht (4) zu unterer Schicht (5) zwischen 10:90 und 90:10, vorzugsweise zwischen 20:80 und 80:20 liegt.

9. Oberflächenfolie nach Anspruch 7 oder 8, **dadurch gekennzeichnet, dass** die obere Schicht (4) witterungsstabilisierende Additive aufweist.

10. Verwendung einer Oberflächenfolie nach einem der Ansprüche 5 bis 9 für ein Sportgerät, insbesondere Schi, Snowboard oder Wassersportgerät.

## Claims

1. Plastic compound comprising a thermoplastic polyurethane and an adhesion promoter, **characterized in that** the adhesion promoter contains a copolymer with monomer units, which monomer units have a functional group which is selected from at least one of the following: a maleimide group, an epoxy group or an oxazoline group.

2. Plastic compound according to claim 1, **characterized in that** the adhesion promoter contains a copolymer of styrene and N-phenylmaleimide, a copolymer of styrene and 2-isopropenyl-2-oxazoline, a copolymer of styrene acrylonitrile and N-phenylmaleimide and/or a copolymer of styrene and glycidyl methacrylate.

3. Plastic compound according to claim 2, **characterized in that** the adhesion promoter contains a terpolymer of methyl methacrylate, styrene and N-phenylmaleimide and/or a terpolymer of styrene, maleic anhydride and N-phenylmaleimide.

4. Plastic compound according to one of claims 1 to 3, **characterized in that** the mixing ratio of TPU and the adhesion promoter is between 50:50 and 99.9:0.1 and preferably between 95:5 and 99.5:0.5.

5. Surface film for a piece of sports equipment, **characterized in that** at least one layer of the surface film contains or consists of a plastic compound according to one of claims 1 to 4.

6. Surface film according to claim 5, **characterized in that** the thermoplastic polyurethane is an aromatic polyurethane having a Shore D hardness of over 50.

7. Surface film according to one of claims 5 or 6, **characterized in that** the surface film (1) consists of a top layer (4) of thermoplastic polyurethane and a bottom layer (5) consisting of the compound according to one of claims 1 to 4.

8. Surface film according to claim 7, wherein a ratio of the layer thicknesses of the top layer (4) to the bottom layer (5) is between 10:90 and 90:10, preferably between 20:80 and 80:20.

9. Surface film according to claim 7 or 8, **characterized in that** the top layer (4) has weather-resistant additives.

10. Use of a surface film according to one of claims 5 to 9 for a piece of sports equipment, in particular ski, snowboard or water sports equipment.

## Revendications

1. Mélange de matière plastique, comprenant un polyuréthane thermoplastique et un promoteur d'adhésion, **caractérisé en ce que** le promoteur d'adhésion comporte un copolymère avec des motifs monomères, lesquels motifs monomères présentent un groupe fonctionnel, qui est choisi parmi au moins un de ce qui suit : un groupe maléimide, un groupe époxy ou un groupe oxazoline.

2. Mélange de matière plastique selon la revendication 1, **caractérisé en ce que** le promoteur d'adhésion comporte un copolymère composé de styrène et de N-phénylmaléimide, un copolymère composé de styrène et de 2-isopropényl-2-oxazoline, un copolymère composé de styrène-acrylonitrile et de N-phénylmaléimide et/ou un copolymère composé de styrène et de glycidylméthacrylate.

3. Mélange de matière plastique selon la revendication 2, **caractérisé en ce que** le promoteur d'adhésion comporte un terpolymère composé de méthacrylate de méthyle, de styrène et de N-phénylmaléimide et/ou un terpolymère composé de styrène, d'anhydride maléique et de N-phénylmaléimide.

4. Mélange de matière plastique selon l'une quelconque des revendications 1 à 3, **caractérisé en ce que** le rapport de mélange composé de TPU et du promoteur d'adhésion est compris entre 50:50 et 99,9:0,1 et de préférence entre 95:5 et 99,5:0,5.

5. Film superficiel pour un appareil de sport, **caractérisé en ce qu'**au moins une couche du film superficiel comporte un mélange de matière plastique selon l'une quelconque des revendications 1 à 4 ou en est constituée.

6. Film superficiel selon la revendication 5, **caractérisé en ce que** le polyuréthane thermoplastique est un polyuréthane aromatique avec une dureté supérieure à 50 ShoreD.

7. Film superficiel selon l'une quelconque des revendications 5 ou 6, **caractérisé en ce que** le film superficiel (1) est constitué d'une couche supérieure (4) en polyuréthane thermoplastique et d'une couche inférieure (5) constituée du mélange selon l'une quelconque des revendications 1 à 4.

8. Film superficiel selon la revendication 7, dans lequel un rapport des épaisseurs de couche de la couche supérieure (4) à la couche inférieure (5) est compris entre 10:90 et 90:10, de préférence entre 20:80 et 80:20.

9. Film superficiel selon la revendication 7 ou 8, **caractérisé en ce que** la couche supérieure (4) présente des additifs stabilisants aux intempéries.

10. Utilisation d'un film superficiel selon l'une quelconque des revendications 5 à 9 pour un appareil de sport, en particulier appareil de ski, de surf des neiges ou de sport aquatique.
